# EUROPEAN PATENT SPECIFICATION

(11) **EP 3 462 681 B1**
(45) Date of publication and mention of the grant of the patent: **02.12.2020**
(21) Application number: 18177452.2
(22) Date of filing: 28.12.2012
(51) Int. Cl.: H04L 12/46, H04L 12/761, H04L 12/703, H04L 12/18

(54) **APPARATUS AND METHOD FOR TRANSMITTING MULTICAST SERVICE**
VORRICHTUNG UND VERFAHREN ZUM SENDEN VON MULTICAST-DIENSTEN
APPAREIL ET PROCÉDÉ DE TRANSMISSION DE SERVICE DE MULTIDIFFUSION

(43) Date of publication of application: 03.04.2019
(62) Divisional of application: 12883993.3
(73) Proprietor: Huawei Technologies Co., Ltd., Shenzhen Guangdong 518129 (CN)
(72) Inventor: DONG, Qibing, Shenzhen, Guangdong (CN); ZHOU, Yibo, Shenzhen, Guangdong (CN); LAI, Xiao, Shenzhen, Guangdong (CN)
(74) Representative: Kreuz, Georg Maria

(56) References cited:
- EP-A1- 1 768 319
- EP-A1- 1 983 694
- WANG J ET AL: "MULTIRING TECHNIQUES FOR SCALABLE BATTLESPACE GROUP COMMUNICATIONS", IEEE COMMUNICATIONS MAGAZINE, IEEE SERVICE CENTER, PISCATAWAY, US, vol. 43, no. 11, 1 November 2005 (2005-11-01), pages 124-133, XP001238480, ISSN: 0163-6804, DOI: 10.1109/MCOM.2005.1541703

## Description

### TECHNICAL FIELD

Embodiments of the present invention relate to multicast technologies, and in particular, to a device, computer program, and a method for transmitting multicast services.

### BACKGROUND

Currently, a protection solution for a single multicast ring may use a bidirectional forward detection (Bidirectional Forward Detection, BFD) mechanism. For example, a designated router (Designated Router) and a backup designated router (Backup Designated Router) for a multicast source can detect faults based on a BFD for PIM (BFD for Protocol Independent Multicast, BFD for Protocol Independent Multicast) mechanism to protect a single multicast ring.

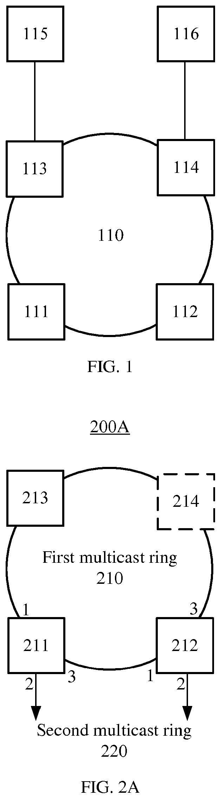

FIG. 1 is a schematic structural diagram of a multicast transmission system. As shown in FIG. 1, a router 113, a router 111, a router 112, and a router 114 are connected in series to form a single multicast ring 110, and a label switch path (Label Switch Path, LSP) is configured for each segment. Each router is configured with a virtual switch interface (Virtual Switch Interface, VSI), which has an independent routing function. One router can be configured with multiple VSIs. A VSI is a virtual switch interface, through which multiple virtual units with the routing function may be implemented on a router to execute functions independently just like a router. No LSP should been configured between the router 113 and the router 114 in order to prevent a data storm. That is, a heartbeat protocol such as the BFD for PIM protocol is run between a service router (Service Router) 115 and a service router 116 (dual sources of a multicast service). In normal cases, the service router 115 serves as a designated router to inject a multicast service into the multicast ring 110, and the service router 116 serves as a backup designated router; a port between the service router 116 and the multicast ring 110 is set to a blocked state and allows only a BFD for PIM protocol packet to pass. When the heartbeat protocol is interrupted due to a failure on the multicast ring, the service router 115 and the service router 116 are in an active router state and send a multicast service to the multicast ring 110.

The foregoing protection solution is applicable only to a single multicast ring. When another downstream multicast ring is connected to the multicast ring, this protection solution cannot protect the downstream multicast ring, which reduces the security of a multicast transmission system.

EP 1768319 A1 discloses a method of inter-RPR-ring bridge redundancy configures a priority for each inter-ring bridge; constituting a redundancy group by more than one inter-ring bridges on both two RPR rings, and configuring one inter-ring bridge as a primary inter-ring bridge in the redundancy group which is in charge of forwarding packets, while the other(s) is (are) set to be secondary inter-ring bridge(s).

EP1983694 A1 discloses a method for transmitting packet in resilient packet intersect ring including: at least two resilient packet intersect ring intersect each other on two intersect node, the intersect node receives a broadcast packet from the first resilient packet ring, and copies the said broadcast packet; the said intersect node judges whether allowing to insert the said broadcast packet into the second resilient packet ring by spanning the ring according to the identification information included in the said copied broadcast packet.

### SUMMARY

Aspects of the present disclosure provide an apparatus, a method, and a computer program for transmitting a multicast service, which can increase the security of a multicast transmission system.
Various aspects of the present disclosure have been defined in the independent claims. Further technical features of each of these aspects have been defined in the respective dependent claims.

In the aspects of the present disclosure, an active port or a standby port can be provided for two aggregation nodes configured to connect a first multicast ring to a downstream second multicast ring, so that these two aggregation nodes can implement node failure protection on the downstream second multicast ring, thereby increasing the security of a multicast transmission system.

### BRIEF DESCRIPTION OF DRAWINGS

To illustrate the technical solutions in the embodiments of the present invention more clearly, the following briefly introduces the accompanying drawings required for describing the embodiments of the present invention. Apparently, some accompanying drawings in the following description show merely some embodiments of the present invention, and a person of ordinary skill in the art may still derive other drawings from these accompanying drawings without creative efforts.
FIG. 1 is a schematic structural diagram of a multicast transmission system.
FIG. 2A is a schematic structural diagram of a system for transmitting a multicast service according to an embodiment of the present invention;
FIG. 2B is a schematic structural diagram of a system for transmitting a multicast service according to another embodiment of the present invention;
FIG. 2C is a schematic structural diagram of a system for transmitting a multicast service according to still another embodiment of the present invention;
FIG. 3 is a schematic structural diagram of a system for transmitting a multicast service according to still another embodiment of the present invention;
FIG. 4 is a schematic structural diagram of a system for transmitting a multicast service according to still another embodiment of the present invention;
FIG. 5 is a schematic structural diagram of an apparatus for transmitting a multicast service according to an embodiment of the present invention;
FIG. 6 is a schematic structural diagram of an apparatus for transmitting a multicast service according to an embodiment of the present invention;
FIG. 7A is a schematic diagram of a normal scenario during transmission of a multicast service according to an embodiment of the present invention;
FIG. 7B is a schematic diagram of a failure scenario during transmission of a multicast service according to an embodiment of the present invention;
FIG. 7C is a schematic diagram of still another failure scenario during transmission of a multicast service;
FIG. 7D is a schematic diagram of still another failure scenario during transmission of a multicast service;
FIG. 7E is a schematic diagram of still another failure scenario during transmission of a multicast service according to an embodiment of the present invention;
FIG. 8 is a schematic flowchart of a method for transmitting a multicast service according to an embodiment of the present invention; and
FIG. 9 is a schematic structural diagram of an apparatus for transmitting a multicast service according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

FIG. 2A is a schematic structural diagram of a system 200A for transmitting a multicast service according to an embodiment of the present invention. The system 200A includes a first multicast ring 210 and a second multicast ring 220.

The first multicast ring 210 includes a first node 211, a second node 212, and at least one third node (for example, a node 213 and/or a node 214). The second multicast ring 220 is connected to the first multicast ring 210 through the first node 211 and the second node 212, where each of the first node 211 and the second node 212 includes: a first port 1 and a third port 3, configured to receive and forward a multicast service received on the first multicast ring 210; a second port 2, configured to: when serving as an active port, forward the multicast service received from the first multicast ring 210 to the second multicast ring 220, and when serving as a standby port, block forwarding of the multicast service received from the first multicast ring 210 to the second multicast ring 220, where in normal cases, one port of the second port 2 of the first node 211 and the second port 2 of the second node 212 is an active port, and the other port of the second port 2 of the first node 211 and the second port 2 of the second node 212 is a standby port.

For example, the first multicast ring 210 and the second multicast ring 220 may be an upstream multicast ring and a downstream multicast ring in the system 200A that are connected through aggregation nodes (that is, the first node 211 and the second node 212); that is, the first multicast ring 210 receives a multicast service forwarded by the upstream multicast ring or directly receives a multicast service from a multicast source, and forwards the multicast service to the second multicast ring 220 through an aggregation node. The third node 213 can receive the multicast service forwarded by the upstream multicast ring or directly receive the multicast service from the multicast source, and transmit the multicast service on the first multicast ring 210 through the first node 211, the second node 212, and another third node 214. The first port 1 of the first node 211 receives the multicast service forwarded by the third node 213, and the first port 1 of the second node 212 receives the multicast service forwarded by the third port 3 of the first node 211.

When the second port 2 of the first node 211 serves as an active port while the second port 2 of the second node 212 serves as a standby port, the first node 211 forwards the multicast service to the second multicast ring 220 through the second port 2 of the first node 211. The second port 2 of the second node 212 is in a blocked state, and neither sends the multicast service to the second multicast ring 220 nor receives the multicast service forwarded by the second multicast ring 220. It should be noted that the second port 2 of the second node 212 is in the blocked state only for the multicast service and the second port 2 of the second node 212 allows a heartbeat protocol signaling to pass when it is in the blocked state.

When the second port 2 of the first node 211 serves as a standby port while the second port 2 of the second node 212 serves as an active port, the second node 212 forwards the multicast service to the second multicast ring 220 through the second port 2 of the second node 212. The second port 2 of the first node 211 is in a blocked state, and neither sends the multicast service to the second multicast ring 220 nor receives the multicast service forwarded by the second multicast ring 220. The second port 2 of the first node 211 is in the blocked state only for the multicast service and the second port 2 of the first node 211 allows a heartbeat protocol signaling to pass when it is in the blocked state.

In the embodiment of the present invention, an active port or a standby port can be provided for two aggregation nodes configured to connect a first multicast ring to a downstream second multicast ring, so that these two aggregation nodes can implement node failure protection on the downstream second multicast ring, thereby increasing the security of a multicast transmission system.

It should be understood that the embodiment of the present invention is described by using two multicast rings as an example. According to the embodiment of the present invention, the first multicast ring 210 and the second multicast ring 220 may be two intersecting rings used for transmitting a multicast service. For example, the first multicast ring 210 is an aggregation ring connected to the multicast source, and the second multicast ring 220 is an access ring connected to a user. In this case, a node of the first multicast ring 210 may be any device with a layer 2 function (for example, a router with a layer 2 function), and a node of the second multicast ring 220 may be a layer 2 device (for example, a switch). The embodiment of the present invention is not limited thereto. For example, the first multicast ring 210 may also be an upper-level access ring, while the second multicast ring 220 may also be a lower-level access ring. In this case, nodes of the first multicast ring 210 and the second multicast ring 220 may be layer 2 devices.

It should also be understood that the first multicast ring 210 and the second multicast ring 220 may not be intersecting ring and nodes of the first multicast ring 210 and nodes of the second multicast ring 220 may also be connected through a link between the nodes.

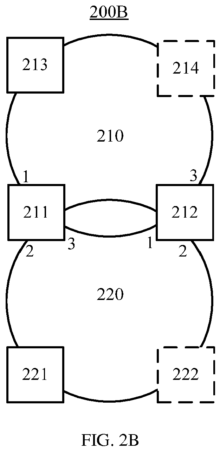

FIG. 2B is a schematic structural diagram of a system 200B for transmitting a multicast service according to another embodiment of the present invention. The system 200B is an example of the system 200A in FIG. 2A, including a first multicast ring 210 and a second multicast ring 220. The system 200B in FIG. 2B is similar to the system 200A in FIG. 2A, which is not detailed herein.

The second multicast ring 220 includes a first node 211, at least one fourth node 221, and a second node 212 that are connected in sequence. The first multicast ring 210 and the second multicast ring 220 are intersecting ring, and the first node 211 and the second node 212 are shared devices of the first multicast ring 210 and the second multicast ring 220. When the second port 2 of the first node 211 serves as an active port while the second port 2 of the second node 212 serves as a standby port, the first node 211 forwards a multicast service to the second multicast ring 220 through the second port 2 of the first node 211, and the fourth node 221 receives the multicast service forwarded by the first node 211, and forwards the multicast service to the other fourth node 222. The second port 2 of the second node 212 is in a blocked state, and neither sends the multicast service to the second multicast ring 222 nor receives the multicast service forwarded by the second multicast ring 222. It should be noted that the second port 2 of the second node 212 is in the blocked state only for the multicast service and the second port 2 of the second node 212 allows a heartbeat protocol signaling to pass when it is in the blocked state.

When the second port 2 of the first node 211 serves as a standby port while the second port 2 of the second node 212 serves as an active port, the second node 212 forwards a multicast service to the second multicast ring 220 through the second port 2 of the second node 212, and the other fourth node 222 receives the multicast service forwarded by the second node 212, and forwards the multicast service to the fourth node 221.

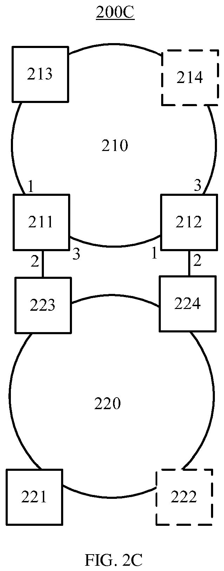

FIG. 2C is a schematic structural diagram of a system 200C for transmitting a multicast service according to still another embodiment of the present invention. The system 200C is an example of the system 200A in FIG. 2A, including a first multicast ring 210 and a second multicast ring 220. The system 200C in FIG. 2C is similar to the system 200A in FIG. 2A, which is not detailed herein.

The second multicast ring 220 includes a fifth node 223, at least one fourth nodes 221 and 222, and a sixth node 224, where the second multicast ring 220 is connected to the first node 221 through the fifth node 223 and is connected to the second node 212 through the sixth node 224. That is, the first multicast ring 210 and the second multicast ring 220 are connected through a link between the first node 211 and the fifth node 223 and a link between the second node 212 and the sixth node 224.

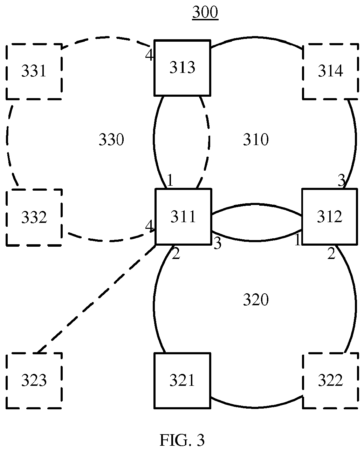

FIG. 3 is a schematic structural diagram of a system 300 for transmitting a multicast service according to still another embodiment of the present invention. The system 300 is an example of the system 200A in FIG. 2A, including a first multicast ring 310 and a second multicast ring 320. The system 300 in FIG. 3 is similar to the system 200 in FIG. 2A, which is not detailed herein.

The first multicast ring 310 includes a first node 311, a second node 312, and at least one third node (for example, a node 313 and/or a node 314). The second multicast ring 320 includes the first node 311, at least one fourth node (for example, a node 321 and/or a node 322), and the second node 312, where each of the first node 311 and the second node 312 includes: a first port 1 and a third port 3, configured to receive and forward a multicast service received on the first multicast ring 310; and a second port 2, configured to: when serving as an active port, forward the multicast service received from the first multicast ring 310 to the second multicast ring 320, and when serving as a standby port, block forwarding of the multicast service received from the first multicast ring 310 to the second multicast ring 320, where in normal cases, one port of the second port 2 of the first node 311 and the second port 2 of the second node 312 is an active port, and the other port of the second port 2 of the first node 311 and the second port 2 of the second node 312 is a standby port.

In the embodiment of the present invention, the first node and the second node are aggregation nodes. In addition, in the embodiment of the present invention, attributes of ports of the aggregation nodes are defined. For example, the ports of the aggregation nodes are defined as the following three types: a mandatory broadcast port, an active port, and a standby port. For example, a VSI (Virtual Switch Interface, virtual switch interface) configured on the aggregation node forwards a multicast service flow to the mandatory broadcast port. The VSI configured on the aggregation nodes forwards a multicast service flow to the active port, and blocks forwarding of a multicast service flow to the standby port.

Alternatively, as another embodiment, when the first node 311 detects that a failure occurs on the second multicast ring 320, the first node 311 keeps the second port 2 of the first node 311 as an active port or switches the second port 2 of the first node 311 from a standby port to an active port.

For example, when the second port 2 of the first node 311 is an active port, if the first node 311 detects that a failure occurs on the second multicast ring 320, the first node keeps the second port 2 of the first node 311 as the active port. When the second port 2 of the first node 311 is a standby port, if the first node 311 detects that a failure occurs on the second multicast ring 320, the first node 311 switches the second port 2 of the first node 311 to an active port.

Alternatively, as another embodiment, when the second node 312 detects that a failure occurs on the second multicast ring 320, the second node 312 keeps the second port 2 of the second node 312 as an active port or switches the second port 2 of the second node 312 from a standby port to an active port.

For example, when the second port 2 of the second node 312 is an active port, if the second node 312 detects that a failure occurs on the second multicast ring 320, the second node 312 keeps the second port 2 of the second node 312 as the active port. When the second port 2 of the second node 312 is a standby port, if the second node 312 detects that a failure occurs on the second multicast ring 320, the second node 312 switches the second port 2 of the second node 312 to an active port.

According to the embodiment of the present invention, the first node 311 or the second node 312 determines whether a failure occurs on the second multicast ring according to a heartbeat protocol signaling transmitted on the second multicast ring 320, where the failure includes a failure of a node on the second multicast ring 320 or a failure of a link between nodes on the second multicast ring 320.

According to the embodiment of the present invention, the second multicast ring 320 runs the heartbeat protocol between the active port and the standby port to keep the active state or the standby state of the active port and the standby port. For example, the heartbeat protocol signaling may be an HELLO protocol signaling. The embodiment of the present invention is not limited thereto. For example, the heartbeat protocol signaling may also be a link detection signaling, a master-salve identification packet, and the like. For example, multiple multicast paths may be configured in a link of the second multicast ring, and each multicast path may be formed by connection of LSPs between the nodes. The heartbeat protocol packet may be transmitted in one multicast path of the multiple multicast paths, and the heartbeat protocol packet can pass the active port and the standby port. If the heartbeat protocol is interrupted due to a failure of a link between the active port and the standby port on the second multicast ring 320, the standby port is switched to the active port and enters the active state, and the blocked state of the standby port is eliminated. In this case, the second multicast ring 320 may have two active ports; that is, a node where the two active ports are located forwards a multicast service to the two ports. The active port and the standby port exist in a pair. For the second multicast ring, the active port and the standby port are two multicast sources of a multicast service of the second multicast ring, so that a dual-source protection is formed, thereby increasing the security of a system. Further, after the heartbeat protocol is recovered normally, one port of the two active ports may be switched from the active port to the standby port. For example, a port that is usually in the standby port state may be switched back to the standby port. The embodiment of the present invention is not limited thereto. For example, one port of the two active ports may also be switched from the active port to the standby port according to a preset rule.

For example, the first node 311 determines whether a failure occurs on the second multicast ring 320 according to a heartbeat protocol signaling transmitted on the second multicast ring 320, where the failure includes a failure of a node on the second multicast ring 320 or a failure of a link between nodes on the second multicast ring 320. The second node 312 determines whether a failure occurs on the second multicast ring 320 according to a heartbeat protocol signaling transmitted on the second multicast ring 320, where the failure includes a failure of a node on the second multicast ring 320 or a failure of a link between nodes on the second multicast ring 320. For example, when a link between the node 321 and the node 322 on the second multicast ring 321 is disconnected, the second port 2 of the first node 311 is kept as the active port while the second port of the second node 322 is changed to the active port. In this way, the first node 311 forwards service data to the node 321, and the second node 312 forwards service data to the node 322.

Alternatively, as another embodiment, the system 300 further includes a third multicast ring 330.

The third multicast ring 330 is connected to the first multicast ring 310 through the first node 311 and one of the at least third node 313. For example, the third multicast ring 330 includes the first node 311, at least one fifth node 331, and one of the at least third node 313, where each of one of the at least third node 313 and the first node 311 includes: a fourth port 4, configured to: when serving as an active port, forward a multicast service received from the first multicast ring to the third multicast ring 330, and when serving as a standby port, block forwarding of the multicast service received from the first multicast ring 310 to the third multicast ring 330, where one port of the fourth port 4 of the first node 311 and the fourth port 4 of one of the at least third node 313 is an active port, and the other port of the fourth port 4 of the first node 311 and the fourth port 4 of one of the at least third node 313 is a standby port. Alternatively, as another embodiment, the third multicast ring 330 may also be connected to the first multicast ring 310 through a link between the node and the first node 311 on the third multicast ring.

When the first node 311 detects that a failure occurs on the third multicast ring 330, the fourth port 4 of the first node 311 is kept as an active port or is switched from a standby port to an active port.

For example, when the fourth port of the first node 311 is an active port, if the first node 311 detects that a failure occurs on the third multicast ring 330, the fourth port of the first node 311 is kept as the active port. When the fourth port of the first node 311 is a standby port, if the first node 311 detects that a failure occurs on the third multicast ring 330, the fourth port of the first node 311 is switched to an active port.

Alternatively, as another embodiment, when the third node 313 detects that a failure occurs on the third multicast ring 330, the fourth port 4 of the third node 313 is kept as an active port or is switched from a standby port to an active port.

For example, when the fourth port 4 of the third node 313 is an active port, if the third node 313 detects that a failure occurs on the third multicast ring 330, the fourth port 4 of the third node 313 is kept as the active port. When the fourth port of the third node 313 is a standby port, if the third node 313 detects that a failure occurs on the third multicast ring 330, the fourth port 4 of the third node 313 is switched to an active port.

For example, the fourth port 4 may be any one of an LSP (Label Switch Path, label switch path) port, an Ethernet port, and an ODUk (Optical Channel Data Unit of k order, optical channel data unit of k order) pipe port.

In the embodiment of the present invention, an active port or a standby port can be provided for two aggregation nodes configured to connect a first multicast ring to a downstream second multicast ring, so that these two aggregation nodes can implement protection the downstream second multicast ring, thereby increasing the security of a system. In addition, according to the embodiment of the present invention, protection can be provided for a multicast system with intersecting rings and multiple rings to satisfy various requirements for networking transmission of a multicast service.

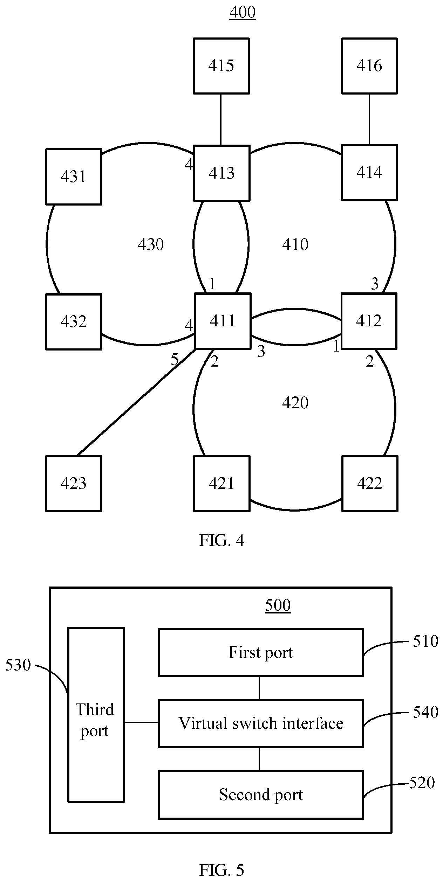

FIG. 4 is a schematic structural diagram of a system 400 for transmitting a multicast service according to still another embodiment of the present invention. The first multicast ring 410 and the second multicast ring 420 in FIG. 4 are similar to the first multicast ring 210 and the second multicast ring 220 in FIG. 2A, which are not further described herein.

According to the embodiment of the present invention, the first multicast ring 410 is an aggregation ring, and the second multicast ring 420 is an access ring, and two nodes (a node 413 and a node 414) of the foregoing at least one third node are connected to two multicast sources (a service router 415 and a service router 416) respectively, where one multicast source of the two multicast sources is an active multicast source and the other multicast source of the two multicast sources is a standby multicast source.

According to the embodiment of the present invention, a first port 1 and a third port 3 are any one of an LSP port, an Ethernet port, and an ODUk pipe port, and a second port 2 is any one of an LSP port, an Ethernet port, and an ODUk pipe port.

For example, when an LSP is configured on the first multicast ring and the second multicast ring, the first port and the second port may be the LSP port; when an ODUk pipe is configured on the first multicast ring and the second multicast ring, the first port and the second port are the ODUk pipe port; when an Ethernet link is configured on the first multicast ring and the second multicast ring, the first port and the second port may be a user node interface (User node Interface, UNI) such as the Ethernet port (for example, GE/10G port). The embodiment of the present invention is not limited thereto. The first port, the second port, and the third port may be any one of the LSP port, the Ethernet port, and the ODUk pipe port. For example, if an LSP is configured on the first multicast ring, the first port may be the LSP port; if an ODUk pipe is configured on the second multicast ring, the second port is the ODUk pipe port; or, if an LSP is configured on the second multicast ring, the second port is the LSP port; if an ODUk pipe is configured on the first multicast ring, the first port is the ODUk pipe port.

According to the embodiment of the present invention, no multicast path is configured on the second multicast ring 420 between the first node 411 and the second node 412. In this way, it can be avoided that a data storm is formed within a second multicast. For example, the first multicast ring 410 can configure any one of the LSP, the ODUk pipe, and the Ethernet link, and the second multicast ring can also configure any one of the LSP, the ODUk pipe, and the Ethernet link.

The first node 411 may further include a fifth port 5. The fifth port 5 may be an optical line terminal (Optical Line Terminal, OLT) port. The fifth port 5 may be a mandatory broadcast port and is configured to provide an optical line terminal 423 with a multicast service.

For example, the first node 411 in FIG. 4 serves as an aggregation node to connect two access rings 420 and 430 and a device 423 (for example, an OLT device or a layer 2 device), and has a total of five ports (1, 2, 3, 4, and 5). The access ring 430 includes the first node 411, at least one fifth nodes 431 and 432, and at least one of the third node 413 that are connected in sequence. As shown in FIG. 4, where the access ring 420 that configures an LSP is used as an example, the access ring 420 is connected to the first node 411 and the second node 412 of the first multicast ring 410, and nodes on the first multicast ring configure a VSI one by one and configure an LSP by segment, but no LSP is configured between two aggregation nodes 413 and 414 to avoid forming a closed ring. The VSI configured by the first node 411 can forward a multicast service received from the first multicast ring 410 to the third port 3 and the fifth port 5. When the fourth port 4 of the first node 411 is an active port, this VSI forwards the multicast service to the fourth port 4 of the first node 411; when the fourth port 4 of the first node 411 is a standby port, this VSI blocks forwarding of the multicast service to the fourth port 4 of the first node 411; when the second port 2 of the first node 411 is an active port, this VSI forwards a multicast service to the second port 2 of the first node 411, and when the second port 2 of the first node 411 is a standby port, this VSI blocks forwarding of the multicast service to the second port 2 of the first node 411.

FIG. 5 is a schematic structural diagram of an apparatus 500 for transmitting a multicast service according to an embodiment of the present invention. The apparatus 500 includes a first port 510, a second port 520, a third port 530, and a virtual switch interface 540. The apparatus in FIG. 5 is an example of the first node or the second node in FIG. 2A to FIG. 4, which are not detailed herein.

The first port 510 and the third port 530 receive and forward a multicast service to a first multicast ring. The second port 520 forwards a multicast service to a second multicast ring when serving as an active port, and blocks forwarding of a multicast service to the second multicast ring when serving as a standby port. The virtual switch interface 540 controls the first port and the second port to forward a multicast service, and sets the second port as an active port or a standby port when the second multicast ring is normal.

For example, the virtual switch interface 540 may be a VSI, and is configured to forward the multicast service received by the first port 510 to the third port 530, forward the multicast service received from the first port 510 to the second port 520 when the second port 520 is in an active state, and block forwarding of the multicast service to the second port 520 when the second port 520 is in a standby state.

In the embodiment of the present invention, an active port or a standby port can be provided for two aggregation nodes configured to connect a first multicast ring to a downstream second multicast ring, so that these two aggregation nodes can implement node failure protection on the downstream second multicast ring, thereby increasing the security of a multicast transmission system.

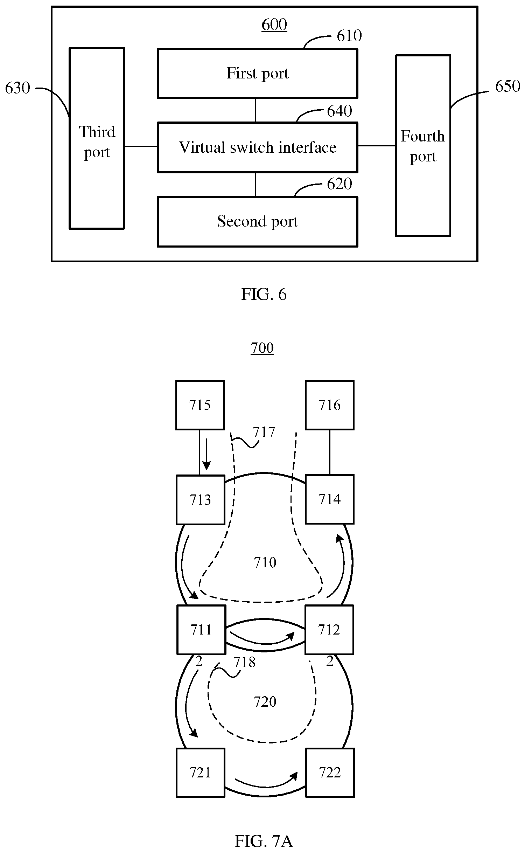

FIG. 6 is a schematic structural diagram of an apparatus 600 for transmitting a multicast service according to an embodiment of the present invention. The apparatus 600 includes a first port 610, a third port 630, a second port 620, and a virtual switch interface 640. The first port 610, the third port 630, the second port 620, and the virtual switch interface 640 are similar to the first port 510, the second port 520, the third port 530, and the virtual switch interface 540 in FIG. 5, which are not further described herein. The apparatus in FIG. 6 is an example of the first node or the second node in FIG. 2A to FIG. 4.

According to the embodiment of the present invention, the virtual switch interface 640 switches the second port to an active port when a failure is detected on the second multicast ring.

According to the embodiment of the present invention, the virtual switch interface 640 determines whether a failure occurs on the second multicast ring according to a heartbeat protocol signaling transmitted on the second multicast ring, where the failure includes a failure of a node on the second multicast ring or a failure of a link between nodes on the second multicast ring.

Alternatively, as another embodiment, the apparatus 600 further includes a fourth port 650.

The fourth port 650 forwards the multicast service received from the first multicast ring to the third multicast ring when serving as an active port, and block forwarding of the multicast service received from the first multicast ring to the third multicast ring when serving as a standby port.

According to the embodiment of the present invention, the first port, the second port or the third port is an LSP port, an Ethernet port, or an ODUk pipe port.

The following describes a failure scenario during transmission of a multicast service in the embodiment of the present invention based on that the first multicast ring is an aggregation ring and the second multicast ring is an access ring.

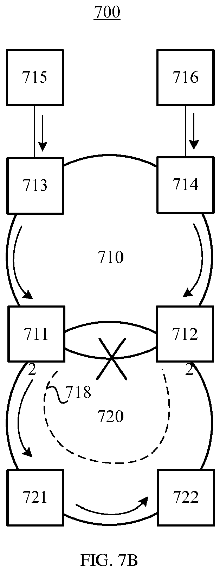

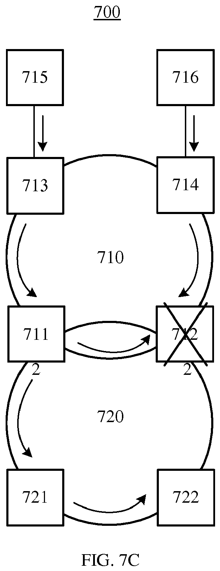

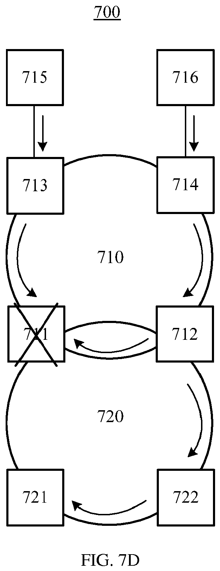

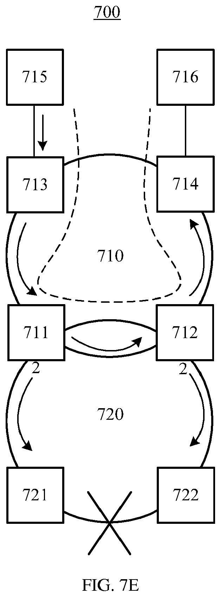

FIG. 7A is a schematic diagram of a normal scenario during transmission of a multicast service according to an embodiment of the present invention. FIG. 7B is a schematic diagram of a failure scenario during transmission of a multicast service to an embodiment of the present invention. FIG. 7C is a schematic diagram of still another failure scenario during transmission of a multicast service. FIG. 7D is a schematic diagram of still another failure scenario during transmission of a multicast service. FIG. 7E is a schematic diagram of still another failure scenario during transmission of a multicast service according to an embodiment of the present invention.

As shown in FIG. 7A, an aggregation ring 710 and an access ring 720 share an aggregation node 711 and an aggregation node 712. The aggregation ring 710 further includes a node 713 and a node 714, where the node 713 and the node 714 are connected to a node 715 and a node 716 respectively. The access ring 720 further includes a node 721 and a node 722, where the node 721 and the node 722 can provide a user or a lower-level access ring (not marked in the figure) with a multicast service. The nodes of the aggregation ring 710 may be layer 2 devices, and the nodes of the access ring 720 may also be layer 2 devices. The node 715 and the node 716 may be routers or layer 2 devices. It should be understood that the node 715 and the node 716 may be multicast sources or be aggregation nodes on an upstream multicast ring.

During normal transmission of a multicast service, the node 715 is in an active node state, and the node 716 is in a standby node state; the node 715 transmits a multicast service to the node 713 on the aggregation ring 710, and then the multicast service is transmitted along the aggregation ring 710; that is, the multicast service is transmitted through the node 713, the aggregation node 711, the aggregation node 712, and the node 714. When the active node is a multicast source, the active node can send a multicast service to the aggregation ring. When the active node is an aggregation node, the active node can send a multicast service to the access ring. A port connecting the node 716 to the aggregation ring 710 is in a blocked state. The heartbeat protocol is run between the node 715 and the node 716, that is, on a path (represented by a dotted line 717) formed by the node 715, the node 713, the aggregation node 711, the aggregation node 712, the node 714, and the node 716, to perform fault detection on the aggregation ring 710. In addition, on the access ring 720, a port 2 of the aggregation node712 is in an active port state, while a port 2 of the aggregation node 712 is in a standby port state. The aggregation node 711 receives a multicast service transmitted on the aggregation ring 710, and transmits the multicast service through the aggregation node 711, the node 721, and the node 722. The port 2 connecting the aggregation node 712 to the access ring 720 is in a blocked state. Another heartbeat protocol is also run on the access ring 720, that is, on a path (represented by a dotted line 718) formed by the aggregation node 711, the node 721, the node 722, and the aggregation node 712, to perform fault detection on the access ring 720.

As shown in FIG. 7B, when a failure occurs between the aggregation node 711 and the aggregation node 712, the heartbeat protocol signaling between the node 715 and the node 716 is interrupted, and the node 715 and the node 716 detect the failure. In this case, the node 715 keeps the active node state, while the node 716 switches from the standby node state to the active node state. In this way, the node 715 and the node 716 are in the active node state, and transmit a multicast service to the aggregation ring 710 concurrently. The node 713 and the node 711 on the aggregation ring 710 receive the multicast service from the node 715, and the node 714 and the node 712 receive the multicast service from the node 716. The heartbeat protocol signaling (for example, the Hello Protocol) run between the node 711 and the node 712 is normal. Therefore, the multicast service of the access ring 710 keeps the original state and is not affected; that is, the port 2 of the aggregation node 711 keeps the active port state, while the port 2 of the aggregation node 712 keeps the blocked state of the standby port. On the access ring 720, the aggregation node 711 transmits the multicast service received from the aggregation ring 710 to the node 721, and the node 721 transmits the multicast service received from the aggregation node 711 to the node 722.

As shown in FIG. 7C, when a failure occurs on the aggregation node 712, the heartbeat protocol signaling between the node 715 and the node 716 is interrupted, and the node 715 and the node 716 detect the failure. In this case, the node 715 keeps the active node state, while the node 716 switches from the standby node state to the active node state. In this way, the node 715 and the node 716 are in the active node state, and transmit a multicast service to the aggregation ring 710 concurrently. The node 713 and the node 711 on the aggregation ring 710 receive the multicast service from the node 715, and the node 714 receives the multicast service from the node 716. Because the aggregation node 712 is faulty, the heartbeat protocol run on the access ring 720 is interrupted, so that port 2 of the aggregation node 711 keeps the active port state. In this way, on the access ring 720, the aggregation node 711 transmits the multicast service received from the aggregation ring 710 to a node 721; the node 721 transmits the multicast service received from the aggregation node 711 to the node 722.

As shown in FIG. 7D, when a failure occurs on the aggregation node 711, the heartbeat protocol signaling between the node 715 and the node 716 is interrupted, and the node 715 and the node 716 detect the failure. In this case, the node 715 keeps the active node state, while the node 716 switches from the standby node state to the active node state. In this way, the node 715 and the node 716 are in the active node state, and transmit a multicast service to the aggregation ring 710 concurrently. The node 713 on the aggregation ring 710 receives a multicast service from the node 715. The node 714 and the aggregation node 712 receive a multicast service from the node 716. Because the aggregation node 711 is faulty, the heartbeat protocol run on an access ring 710 is interrupted, so that port 2 of the aggregation node 712 switches from the standby port state to the active port state. In this way, on the access ring 720, the aggregation node 712 transmits the multicast service received from the aggregation ring 710 to the node 722; the node 722 transmits the multicast service received from the aggregation node 712 to the node 721.

As shown in FIG. 7E, when a failure occurs between a node 721 and a node 722, the heartbeat protocol signaling between a node 715 and a node 716 is normal. In this case, the node 715 keeps the active node state, while the node 716 keeps the standby node state, and the aggregation ring 710 keeps the original state. The node 713 on the aggregation ring 710 receives a multicast service from the node 715, and forwards the multicast service to the aggregation node 711. The aggregation node 711 receives the multicast service from the node 713, and forwards the multicast service to the aggregation node 712. The aggregation node 712 receives the service from the aggregation node 711, and forwards the multicast service to the node 714. The heartbeat protocol signaling on the access ring 720 is interrupted; port 2 of the aggregation node 711 keeps the original active port state, while port 2 of the aggregation node 712 switches from the standby port state to the active port state. In this way, port 2 of the aggregation node 711 and port 2 of the aggregation node 712 are in the active port state, and forward the multicast service received from the aggregation ring 710 to the access ring 720 concurrently; that is, the aggregation node 711 transmits the multicast service to the node 721, while the aggregation node 712 transmits the multicast service to the node 722.

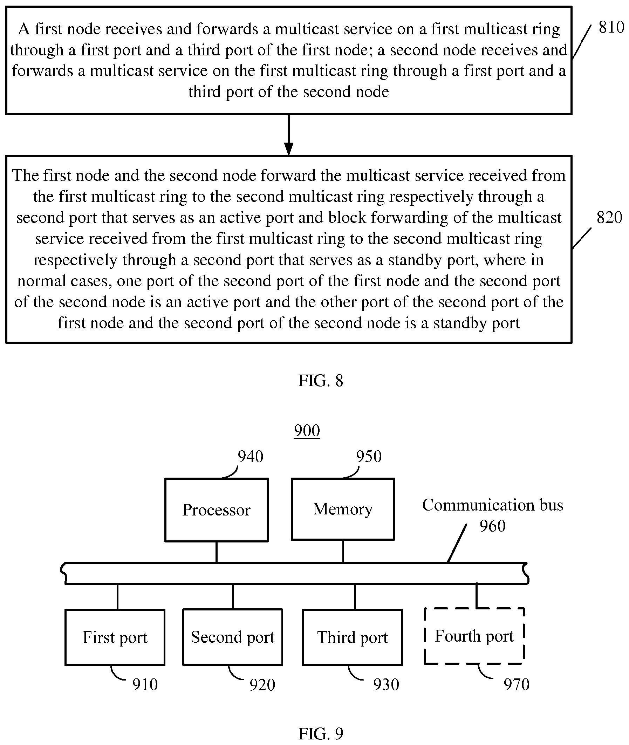

FIG. 8 is a schematic flowchart of a method for transmitting a multicast service according to an embodiment of the present invention. The method in FIG. 8 is executed by the system 2A in FIG. 2A. The method in FIG. 8 includes the following steps:
Step 810: A first node receives and forwards a multicast service on a first multicast ring through a first port and a third port of the first node; a second node receives and forwards a multicast service on the first multicast ring through a first port and a third port of the second node, where the first multicast ring includes the first node, the second node and at least one third node, and a second multicast ring is connected to the first multicast ring through the first node and the second node.

Step 820: The first node and the second node forward the multicast service received from the first multicast ring to the second multicast ring respectively through a second port that serves as an active port and block forwarding of the multicast service received from the first multicast ring to the second multicast ring respectively through a second port that serves as a standby port, where in normal cases, one port of the second port of the first node and the second port of the second node is an active port, and the other port of the second port of the first node and the second port of the second node is a standby port.

In the embodiment of the present invention, an active port or a standby port can be provided for two aggregation nodes configured to connect a first multicast ring to a downstream second multicast ring, so that these two aggregation nodes can implement node failure protection on the downstream second multicast ring, thereby increasing the security of a system.

Alternatively, as another embodiment, the method in FIG. 8 further includes: detecting, by the first node, whether a failure occurs on the second multicast ring; if a failure is detected on the second multicast ring, keeping the second port of the first node as an active port or switching the second port of the first node from a standby port to an active port.

Alternatively, as another embodiment, the second node may detect whether a failure occurs on the second multicast ring; if a failure is detected on the second multicast ring, keeping the second node of the second node as an active port or switching the second port of the second node from a standby port to an active port.

According to the embodiment of the present invention, to detect whether a failure occurs on the second multicast ring, whether a failure occurs on the second multicast ring can be determined according to a heartbeat protocol signaling transmitted on the second multicast ring, where the failure includes a failure of a node on the second multicast ring or a failure of a link between nodes on the second multicast ring.

According to the embodiment of the present invention, the first multicast ring is an aggregation ring, and the second multicast ring is an access ring, and two nodes of the foregoing at least one third node are connected to two multicast sources respectively, where one multicast source of the two multicast sources is an active multicast source and the other multicast source of the two multicast sources is a standby multicast source.

According to the embodiment of the present invention, any one of the first port, the second port, and the third port is an LSP port, an Ethernet port, or an ODUk pipe port.

According to the embodiment of the present invention, the first node configures a multicast path with the second node through the at least one fourth node, and no direct multicast path is configured on the second multicast ring between the first node and the second node.

FIG. 9 is a schematic structural diagram of an apparatus 900 for transmitting a multicast service according to another embodiment of the present invention. The apparatus 900 includes a first port 910, a second port 920, a third port 930, a processor 940, a memory 950, and a communication bus 960. The apparatus 900 is an example of the apparatus 500 in FIG. 5.

The first port 910 and the third port 930 receive and forward a multicast service on a first multicast ring. The second port 920 forwards a multicast service to a second multicast ring when serving as an active port, and blocks forwarding of a multicast service to the second multicast ring when serving as a standby port. The processor 940 invokes a code in the memory 950 through the communication bus 960, and is configured to control the first port 910 and the second port 920 to forward the multicast service, and set the second port 920 as an active port or a standby port when the second multicast ring is normal.

In the embodiment of the present invention, an active port or a standby port can be provided for two aggregation nodes configured to connect a first multicast ring to a downstream second multicast ring, so that these two aggregation nodes can implement node failure protection on the downstream second multicast ring, thereby increasing the security of a system.

According to the embodiment of the present invention, the processor 940 keeps the second port 920 as an active port or switches the second port 920 from a standby port to an active port when a failure is detected on the second multicast ring.

According to the embodiment of the present invention, the processor 940 determines whether a failure occurs on the second multicast ring according to a heartbeat protocol signaling transmitted on the second multicast ring, where the failure includes a failure of a node on the second multicast ring or a failure of a link between nodes on the second multicast ring.

Alternatively, as another embodiment, the apparatus 900 further includes a fourth port 970. The fourth port 970 forwards the multicast service received from the first multicast ring to the third multicast ring when serving as an active port, and block forwarding of the multicast service received from the first multicast ring to the third multicast ring when serving as a standby port.

According to the embodiment of the present invention, any one of the first port, the second port, and the third port is an LSP port, an Ethernet port, or an ODUk pipe port.

A person of ordinary skill in the art may be aware that in combination with the examples described in the embodiments disclosed in this specification, units and algorithm steps may be implemented by electronic hardware, or a combination of computer software and electronic hardware. Whether the functions are performed by hardware or software depends on the particular applications and design constraint conditions of the technical solution. A person skilled in the art may use different methods to implement the described functions for each particular application, but it should not be considered that the implementation goes beyond the scope of the present invention.

It may be clearly understood by a person skilled in the art that for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and the parts displayed as units may or may not be physical units, may be located in one position, or may be distributed on a plurality of network units. Some or all of the units may be selected to achieve the objective of the solution of the embodiment according to actual needs.

In addition, functional units in the embodiments of the present invention may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The computer software product is stored in a storage medium, and includes several instructions for instructing a computer device (which may be a personal computer, a server, or a network device) to perform all or a part of the steps of the methods described in the embodiment of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A device (211, 311, 411, 711) for transmitting a multicast service, wherein the device is a first node on a first multicast ring (210, 310, 410, 710), the first multicast ring comprises the first node (211, 311, 411, 711), a second node (212, 312, 313, 412, 414, 712), and at least one third node (213, 214, 313, 314, 413, 414, 713, 714), and a second multicast ring (220, 320, 330, 420, 430, 720) connected to the first multicast ring (210, 310, 410, 710) through the first node (211, 311, 411, 711) and the second node (212, 312, 313, 412, 414, 712), and wherein each of the first node and the second node comprises:
a first port (510, 610) and a third port (530, 630), configured to receive and forward a multicast service on the first multicast ring(210, 310, 410, 710);
a second port (520, 620), configured to: when serving as an active port, forward the multicast service received from the first multicast ring to the second multicast ring (220, 320, 330, 420, 430, 720); when serving as a standby port, block forwarding of the multicast service received from the first multicast ring to the second multicast ring; and
a virtual switch interface (540, 640), configured to set the second port (520, 620) as an active port or a standby port when the second multicast ring is normal; and keep the second port (520, 620) as an active port or switch the second port (520, 620) from a standby port to an active port when a first link failure is detected on the second multicast ring, so that the second multicast ring has two active ports.

2. The device according to claim 1, wherein:
the virtual switch interface (540, 640) is configured to forward the multicast service received from the first port (510, 610) to the second port (520, 620) when the second port serves as an active port, and block forwarding of the multicast service to the second port when the second port serves as a standby port.

3. The device according to claims 1 or 2, wherein:
the second port (520, 620) is configured to allow a heartbeat protocol signaling to pass when serving as a standby port.

4. The device according to claim 3, wherein:
the virtual switch interface (540, 640) is configured to detect the first link failure on the second multicast ring according to the heartbeat protocol signaling.

5. The device according to any one of claims 1-4, further comprising:
a fourth port (650), configured to: when serving as an active port, forward the multicast service received from the first multicast ring to a third multicast ring, and when serving as a standby port, block forwarding of the multicast service received from the first multicast ring to the third multicast ring.

6. The device according to claim 5, wherein:
the device is configured to keep the fourth port (650) as an active port or switch the fourth port from a standby port to an active port when a second link failure is detected on the third multicast ring.

7. A method for transmitting a multicast service, wherein the method is implemented by each of a first node and a second node, the method comprises:
receiving and forwarding (810) a multicast service on a first multicast ring through a first port and a third port; wherein the first multicast ring comprises the first node, the second node and at least one third node, and a second multicast ring is connected to the first multicast ring through the first node and the second node;
forwarding (820) the multicast service received from the first multicast ring to a second multicast ring through a second port that serves as an active port, and blocking forwarding of the multicast service received from the first multicast ring to the second multicast ring through a second port that serves as a standby port;
setting the second port as an active port or a standby port when the second multicast ring is normal; and
keeping the second port as an active port or switching the second port from a standby port to an active port when a first link failure is detected on the second multicast ring, so that the second multicast ring has two active ports.

8. The method according to claim 7, wherein the forwarding the multicast service received from the first multicast ring to a second multicast ring through a second port that serves as an active port, and blocking forwarding of the multicast service received from the first multicast ring to the second multicast ring through a second port that serves as a standby port comprises:
forwarding the multicast service received from the first port to the second port when the second port serves as an active port, and blocking forwarding of the multicast service to the second port when the second port serves as a standby port.

9. The method according to claims 7 or 8, wherein the method comprises:
allowing a heartbeat protocol signaling to pass when the second port serves as a standby port.

10. The method according to claim 9, further comprising:
detecting the first link failure on the second multicast ring according to the heartbeat protocol signaling.

11. The method according to any one of claims 7-10, wherein the method comprises:
forwarding the multicast service received from the first multicast ring to a third multicast ring through a fourth port that serves as an active port, and blocking forwarding of the multicast service received from the first multicast ring to the third multicast ring through the fourth port that serves as a standby port.

12. The method according to claim 11, further comprising:
keeping the fourth port as an active port or switching the fourth port from a standby port to an active port when a second link failure is detected on the third multicast ring.

13. A computer program comprising program code for performing a method according to any of the claims 7 to 12, when the computer program is run on a processor.

## Patentansprüche

1. Vorrichtung (211, 311, 411, 711) zum Übertragen eines Multicast-Dienstes, wobei die Vorrichtung ein erster Knoten in einem ersten Multicast-Ring (210, 310, 410, 710) ist, wobei der erste Multicastring den ersten Knoten (211, 311, 411, 711), einen zweiten Knoten (212, 312, 313, 412, 414, 712) und mindestens einen dritten Knoten (213, 214, 313, 314, 413, 414, 713, 714) umfasst, und ein zweiter Multicast-Ring (220, 320, 330, 420, 430, 720) durch den ersten Knoten (211, 311, 411, 711) und den zweiten Knoten (212, 312, 313, 412, 414, 712) mit dem ersten Multicast-Ring (210, 310, 410, 710) verbunden ist, und wobei der erste Knoten und der zweite Knoten jeweils Folgendes umfassen:
einen ersten Anschluss (510, 610) und einen dritten Anschluss (530, 630), die dafür konfiguriert sind, einen Multicast-Dienst an dem ersten Multicast-Ring (210, 310, 410, 710) zu empfangen und weiterzuleiten,
einen zweiten Anschluss (520, 620), der für Folgendes konfiguriert ist: Weiterleiten des vom ersten Multicast-Ring empfangenen Multicast-Dienstes an den zweiten Multicast-Ring (220, 320, 330, 420, 430, 720), wenn er als ein aktiver Anschluss dient, Blockieren des Weiterleitens des von dem ersten Multicast-Ring empfangenen Multicast-Dienstes an den zweiten Multicast-Ring, wenn er als Bereitschaftsanschluss dient, und
eine virtuelle Schaltschnittstelle (540, 640), die dafür konfiguriert ist, den zweiten Anschluss (520, 620) als einen aktiven Anschluss oder einen Bereitschaftsanschluss einzustellen, wenn der zweite Multicast-Ring normal ist, und den zweiten Anschluss (520, 620) als einen aktiven Anschluss zu halten oder den zweiten Anschluss (520, 620) von einem Bereitschaftsanschluss in einen aktiven Anschluss zu schalten, wenn an dem zweiten Multicast-Ring ein erster Verbindungsfehler erkannt wird, so dass der zweite Multicast-Ring zwei aktive Anschlüsse aufweist.

2. Vorrichtung nach Anspruch 1, wobei:
die virtuelle Schaltschnittstelle (540, 640) dafür konfiguriert ist, den von dem ersten Anschluss (510, 610) empfangenen Multicast-Dienst an den zweiten Anschluss (520, 620) weiterzuleiten, wenn der zweite Anschluss als ein aktiver Anschluss dient, und das Weiterleiten des Multicast-Dienstes an den zweien Anschluss zu blockieren, wenn der zweite Anschluss als ein Bereitschaftsanschluss dient.

3. Vorrichtung nach Anspruch 1 oder 2, wobei:
der zweite Anschluss (520, 620) dafür konfiguriert ist, das Übermitteln einer Heartbeat-Protokoll-Signalisierung zu ermöglichen, wenn er als ein Bereitschaftsanschluss dient.

4. Vorrichtung nach Anspruch 3, wobei:
die virtuelle Schaltschnittstelle (540, 640) dafür konfiguriert ist, den ersten Verbindungsfehler an dem zweiten Multicast-Ring gemäß der Heartbeat-Protokoll-Signalisierung zu erkennen.

5. Vorrichtung nach einem der Ansprüche 1 bis 4, ferner Folgendes umfassend:
einen vierten Anschluss (650), der für Folgendes konfiguriert ist: Weiterleiten des vom ersten Multicast-Ring empfangenen Multicast-Dienstes an einen dritten Multicast-Ring, wenn er als ein aktiver Anschluss dient, und Blockieren des Weiterleitens des von dem ersten Multicast-Ring empfangenen Multicast-Dienstes an den dritten Multicast-Ring, wenn er als Bereitschaftsanschluss dient.

6. Vorrichtung nach Anspruch 5, wobei:
die Vorrichtung dafür konfiguriert ist, den vierten Anschluss (650) als einen aktiven Anschluss zu halten oder den vierten Anschluss von einem Bereitschaftsanschluss in einen aktiven Anschluss zu schalten, wenn an dem dritten Multicast-Ring ein zweiter Verbindungsfehler erkannt wird.

7. Verfahren zum Übertragen eines Multicast-Dienstes, wobei das Verfahren durch jeweils einen ersten Knoten und einen zweiten Knoten umgesetzt wird, wobei das Verfahren Folgendes umfasst:
Empfangen und Weiterleiten (810) eines Multicast-Dienstes auf einem ersten Multicast-Ring durch einen ersten Anschluss und einen dritten Anschluss, wobei der erste Multicast-Ring den ersten Knoten, den zweiten Knoten und mindestens einen dritten Knoten umfasst, und ein zweiter Multicast-Ring durch den ersten Knoten und den zweiten Knoten mit dem ersten Multicast-Ring verbunden ist,
Weiterleiten (820) des vom ersten Multicast-Ring empfangenen Multicast-Dienstes an einen zweiten Multicast-Ring durch einen zweiten Anschluss, der als ein aktiver Anschluss dient, und Blockieren des Weiterleitens des von dem ersten Multicast-Ring empfangenen Multicast-Dienstes an den zweiten Multicast-Ring durch einen zweiten Anschluss, der als ein Bereitschaftsanschluss dient,
Einstellen des zweiten Anschlusses als einen aktiven Anschluss oder einen Bereitschaftsanschluss, wenn der zweite Multicast-Ring normal ist, und
Halten des zweiten Anschlusses als einen aktiven Anschluss oder Schalten des zweiten Anschlusses von einem Bereitschaftsanschluss in einen aktiven Anschluss, wenn an dem zweiten Multicast-Ring ein erster Verbindungsfehler erkannt wird, so dass der zweite Multicast-Ring zwei aktive Anschlüsse aufweist.

8. Verfahren nach Anspruch 7, wobei das Weiterleiten des von dem ersten Multicast-Ring empfangenen Multicast-Dienstes an einen zweiten Multicast-Ring durch einen zweiten Anschluss, der als ein aktiver Anschluss dient, und das Blockieren des Weiterleitens des von dem ersten Multicast-Ring empfangenen Multicast-Dienstes an den zweiten Multicast-Ring durch einen zweiten Anschluss, der als ein Bereitschaftsanschluss dient, Folgendes umfasst:
Weiterleiten des von dem ersten Anschluss empfangenen Multicast-Dienstes an den zweiten Anschluss, wenn der zweite Anschluss als ein aktiver Anschluss dient, und Blockieren des Weiterleitens des Multicast-Dienstes an den zweiten Anschluss, wenn der zweite Anschluss als ein Bereitschaftsanschluss dient.

9. Verfahren nach Anspruch 7 oder 8, wobei das Verfahren Folgendes umfasst:
Ermöglichen des Übermittelns einer Heartbeat-Protokoll-Signalisierung, wenn der zweite Anschluss als ein Bereitschaftsanschluss dient.

10. Verfahren nach Anspruch 9, ferner Folgendes umfassend:
Erkennen des ersten Verbindungsfehlers an dem zweiten Multicast-Ring gemäß der Heartbeat-Protokoll-Signalisierung.

11. Verfahren nach einem der Ansprüche 7 bis 10, wobei das Verfahren Folgendes umfasst:
Weiterleiten des von dem ersten Multicast-Ring empfangenen Multicast-Dienstes an einen dritten Multicast-Ring durch einen vierten Anschluss, der als ein aktiver Anschluss dient, und Blockieren des Weiterleitens des von dem ersten Multicast-Ring empfangenen Multicast-Dienstes an den dritten Multicast-Ring durch den vierten Anschluss, der als Bereitschaftsanschluss dient.

12. Verfahren nach Anspruch 11, ferner Folgendes umfassend:
Halten des vierten Anschlusses als einen aktiven Anschluss oder Schalten des vierten Anschlusses von einem Bereitschaftsanschluss in einen aktiven Anschluss, wenn an dem dritten Multicast-Ring ein zweiter Verbindungsfehler erkannt wird.

13. Computerprogramm, Programmcode zum Ausführen eines Verfahrens nach einem der Ansprüche 7 bis 12, wenn das Computerprogramm auf einem Prozessor läuft, umfassend.

## Revendications

1. Dispositif (211, 311, 411, 711) pour transmettre un service de multidiffusion, le dispositif étant un premier nœud sur un premier anneau de multidiffusion (210, 310,
410, 710), le premier anneau de multidiffusion comprenant le premier nœud (211, 311, 411, 711), un deuxième nœud (212, 312, 313, 412, 414, 712), et au moins un troisième nœud (213, 214, 313, 314, 413, 414, 713, 714), et un deuxième anneau de multidiffusion (220, 320, 330, 420, 430, 720) connecté au premier anneau de multidiffusion (210, 310, 410, 710) par l'intermédiaire du premier nœud (211, 311, 411, 711) et du deuxième nœud (212, 312, 313, 412, 414, 712), et dans lequel chacun du premier nœud et du deuxième nœud comprend :
un premier port (510, 610) et un troisième port (530, 630), configurés pour recevoir et transmettre un service de multidiffusion sur le premier anneau de multidiffusion (210, 310, 410, 710) ;
un deuxième port (520, 620), configuré pour : lorsqu'il sert de port actif, transmettre le service de multidiffusion reçu à partir du premier anneau de multidiffusion au deuxième anneau de multidiffusion (220, 320, 330, 420, 430, 720) ; lorsqu'il sert de port de réserve, bloquer la transmission du service de multidiffusion reçu à partir du premier anneau de multidiffusion au deuxième anneau de multidiffusion ; et
une interface de commutation virtuelle (540, 640), configurée pour définir le deuxième port (520, 620) en tant que port actif ou port de réserve lorsque le deuxième anneau de multidiffusion est normal ; et maintenir le deuxième port (520, 620) en tant que port actif ou commuter le deuxième port (520, 620) depuis un port de réserve vers un port actif lorsqu'un premier défaut de liaison est détecté sur le deuxième anneau de multidiffusion, de sorte que le deuxième anneau de multidiffusion a deux ports actifs.

2. Dispositif selon la revendication 1, dans lequel :
l'interface de commutation virtuelle (540, 640) est configurée pour transmettre le service de multidiffusion reçu à partir du premier port (510, 610) au deuxième port (520, 620) lorsque le deuxième port sert de port actif, et bloquer la transmission du service de multidiffusion au deuxième port lorsque le deuxième port sert de port de réserve.

3. Dispositif selon la revendication 1 ou 2, dans lequel :
le deuxième port (520, 620) est configuré pour permettre à une signalisation de protocole de battement de cœur de passer lorsqu'il sert de port de réserve.

4. Dispositif selon la revendication 3, dans lequel :
l'interface de commutation virtuelle (540, 640) est configurée pour détecter le premier défaut de liaison sur le deuxième anneau de multidiffusion en fonction de la signalisation de protocole de battement de cœur.

5. Dispositif selon l'une quelconque des revendications 1 à 4, comprenant en outre :
un quatrième port (650), configuré pour : lorsqu'il sert de port actif, transmettre le service de multidiffusion reçu à partir du premier anneau de multidiffusion à un troisième anneau de multidiffusion, et lorsqu'il sert de port de réserve, bloquer la transmission du service de multidiffusion reçu à partir du premier anneau de multidiffusion au troisième anneau de multidiffusion.

6. Dispositif selon la revendication 5,
le dispositif étant configuré pour maintenir le quatrième port (650) en tant que port actif ou commuter le quatrième port depuis un port de réserve vers un port actif lorsqu'un deuxième défaut de liaison est détecté sur le troisième anneau de multidiffusion.

7. Procédé de transmission d'un service de multidiffusion, le procédé étant mis en œuvre par chacun d'un premier nœud et d'un deuxième nœud, le procédé comprenant :
recevoir et transmettre (810) un service de multidiffusion sur un premier anneau de multidiffusion par l'intermédiaire d'un premier port et d'un troisième port ; dans lequel le premier anneau de multidiffusion comprend le premier nœud, le deuxième nœud et au moins un troisième nœud, et un deuxième anneau de multidiffusion est connecté au premier anneau de multidiffusion par l'intermédiaire du premier nœud et du deuxième nœud ;
transmettre (820) le service de multidiffusion reçu à partir du premier anneau de multidiffusion à un deuxième anneau de multidiffusion par l'intermédiaire d'un deuxième port qui sert de port actif, et bloquer la transmission du service de multidiffusion reçu à partir du premier anneau de multidiffusion au deuxième anneau de multidiffusion par l'intermédiaire d'un deuxième port qui sert de port de réserve ;
définir le deuxième port en tant que port actif ou port de réserve lorsque le deuxième anneau de multidiffusion est normal ; et
maintenir le deuxième port en tant que port actif ou commuter le deuxième port depuis un port de réserve vers un port actif lorsqu'un premier défaut de liaison est détecté sur le deuxième anneau de multidiffusion, de sorte que le deuxième anneau de multidiffusion a deux ports actifs.

8. Procédé selon la revendication 7, dans lequel la transmission du service de multidiffusion reçu à partir du premier anneau de multidiffusion à un deuxième anneau de multidiffusion par l'intermédiaire d'un deuxième port qui sert de port actif, et le blocage de la transmission du service de multidiffusion reçu à partir du premier anneau de multidiffusion au deuxième anneau de multidiffusion par l'intermédiaire d'un deuxième port qui sert de port de réserve comprend :
transmettre le service de multidiffusion reçu à partir du premier port au deuxième port lorsque le deuxième port sert de port actif, et bloquer la transmission du service de multidiffusion au deuxième port lorsque le deuxième port sert de port de réserve.

9. Procédé selon la revendication 7 ou 8, le procédé comprenant :
permettre à une signalisation de protocole de battement de cœur de passer lorsque le deuxième port sert de port de réserve.

10. Procédé selon la revendication 9, comprenant en outre :
détecter le premier défaut de liaison sur le deuxième anneau de multidiffusion en fonction de la signalisation de protocole de battement de cœur.

11. Procédé selon l'une quelconque des revendications 7 à 10, le procédé comprenant :
transmettre le service de multidiffusion reçu à partir du premier anneau de multidiffusion à un troisième anneau de multidiffusion par l'intermédiaire d'un quatrième port qui sert de port actif, et bloquer la transmission du service de multidiffusion reçu à partir du premier anneau de multidiffusion au troisième anneau de multidiffusion par l'intermédiaire du quatrième port qui sert de port de réserve.

12. Procédé selon la revendication 11, comprenant en outre :
maintenir le quatrième port en tant que port actif ou commuter le quatrième port depuis un port de réserve vers un port actif lorsqu'un deuxième défaut de liaison est détecté sur le troisième anneau de multidiffusion.

13. Programme d'ordinateur comprenant un code de programme pour effectuer un procédé selon l'une quelconque des revendications 7 à 12, lorsque le programme d'ordinateur est exécuté sur un processeur.
